# EUROPÄISCHE PATENTSCHRIFT

(11) **EP 1 798 350 B1**
(45) Veröffentlichungstag und Bekanntmachung des Hinweises auf die Patenterteilung: **27.02.2013**
(21) Anmeldenummer: 06022972.1
(22) Anmeldetag: 04.11.2006
(51) Int. Cl.: E03C 1/10, F16K 15/06

(54) **Rückflussverhinderer**
Device for preventing backflow
Dispositif anti-reflux

(30) Priorität: 15.12.2005 DE 102005062518
(43) Veröffentlichungstag der Anmeldung: 20.06.2007
(73) Patentinhaber: Alfred Kärcher GmbH & Co. KG, 71364 Winnenden (DE)
(72) Erfinder: Friedrich, Rolf, 71364 Winnenden (DE); Sommer, Harald, 71397 Leutenbach (DE)
(74) Vertreter: Hoeger, Stellrecht & Partner Patentanwälte

(56) Entgegenhaltungen:
- EP-A- 1 350 896
- DE-A1- 2 424 978
- DE-C1- 4 231 494
- DE-U1-202005 008 127

## Beschreibung

Die Erfindung betrifft einen Rückflussverhinderer mit den Merkmalen des Oberbegriffes von Patentanspruch 1.

Rückflussverhinderer mit einem Gehäuse, das eine Einlassöffnung, eine Auslassöffnung sowie eine in Durchströmungsrichtung zwischen der Einlass- und der Auslassöffnung angeordnete Leckageöffnung aufweist und das ein erstes und ein zweites Rückschlagventil aufnimmt, die in Durchströmungsrichtung mit identischer Schließrichtung hintereinander angeordnet sind, wobei das erste Rückschlagventil im Gehäuse verschiebbar gehalten ist und durch Hin- und Herverschieben des ersten Rückschlagventils zwischen einer Sperrstellung und einer Freigabestellung eine Strömungsverbindung zwischen einem zwischen den beiden Rückschlagventilen angeordneten Innenraum des Gehäuses und der Leckageöffnung absperrbar bzw. freigebbar ist, sind aus der Patentschrift DE 103 35 379 B3 bekannt. Sie kommen insbesondere bei Reinigungsgeräten, beispielsweise bei Hochdruckreinigungsgeräten oder Waschmaschinen, zum Einsatz, die an eine Trinkwasserversorgungsleitung angeschlossen werden können. Es muss sichergestellt werden, dass verschmutzte Reinigungsflüssigkeit vom Reinigungsgerät nicht in die Trinkwasserversorgungsleitung zurückgelangen kann. Zu diesem Zweck wird zwischen der Trinkwasserversorgungsleitung und dem Reinigungsgerät ein derartiger Rückflussverhinderer geschaltet. Dieser weist Rückschlagventile auf, um die Rückführung von verschmutzter Reinigungsflüssigkeit in die Trinkwasserversorgungsleitung zu unterbinden. Hierbei kommen zwei hintereinander geschaltete Rückschlagventile mit identischer Schließrichtung zum Einsatz. Ein Innenraum des Gehäuses zwischen den beiden Rückschlagventilen steht mit einer Leckageöffnung in Strömungsverbindung, über die der Innenraum des Gehäuses entleert werden kann, falls ein Differenzdruck zwischen dem im Bereich der Einlassöffnung herrschenden Druck und dem im Bereich zwischen den beiden Rückschlagventilen herrschenden Druck einen vorgegebenen Wert unterschreitet.

Um den Innenraum entleeren zu können, ist das erste Rückschlagventil im Gehäuse verschiebbar angeordnet. In einer Sperrstellung wird vom ersten Rückschlagventil die Strömungsverbindung zwischen dem Innenraum und der Leckageöffnung abgesperrt, und in einer Freigabestellung gibt das erste Rückschlagventil die Strömungsverbindung frei. Das Freigeben der Strömungsverbindung stellt sicher, dass bei Unterschreiten des voranstehend genannten Differenzdruckes Reinigungsflüssigkeit über die Leckageöffnung entweichen kann, ohne dass die Gefahr besteht, dass die Reinigungsflüssigkeit entgegen der Durchströmungsrichtung des Rückflussverhinderers in den Bereich der Einlassöffnung gelangen kann.

Im unbelasteten Zustand des Rückflussverhinderers nimmt das erste Rückschlagventil seine Freigabestellung ein und sowohl das erste als auch das zweite Rückschlagventil sind geschlossen. Wird der Rückflussverhinderer beispielsweise an eine Trinkwasserversorgungsleitung angeschlossen, so geht das erste Rückschlagventil in seine Sperrstellung über, so dass die Strömungsverbindung zwischen dem Innenraum des Gehäuses und der Leckageöffnung abgesperrt ist. Wird anschließend ein an die Auslassöffnung des Rückflussverhinderers angeschlossenes Reinigungsgerät in Betrieb genommen, so öffnen beide Rückschlagventile und Wasser kann durch den Rückflussverhinderer zum Reinigungsgerät strömen. Wird das Reinigungsgerät wieder ausgeschaltet, so schließen die beiden Rückschlagventile, jedoch behält das erste Rückschlagventil ventil bei weiterhin im Bereich der Einlassöffnung wirkender Druckbelastung seine Sperrstellung bei. Falls das erste Rückschlagventil nicht zuverlässig schließt, kann sich durch die Undichtigkeit des ersten Rückschlagventils im Laufe der Zeit im Innenraum des Gehäuses ein Druck aufbauen, der dann zur Folge hat, dass das erste Rückschlagventil bei Unterschreiten des voranstehend genannten Differenzdruckes zwischen dem im Bereich der Einlassöffnung herrschenden Druck und dem im Bereich zwischen den beiden Rückschlagventilen herrschenden Druck in seine Freigabestellung übergeht und das erste Rückschlagventil dann aufgrund der starken Druckabsenkung im Bereich zwischen den beiden Rückschlagventilen vollständig öffnet. Dies hat zur Folge, dass beispielsweise aus einer Trinkwasserversorgungsleitung dem Rückflussverhinderer zugeführtes Wasser von der Einlassöffnung durch das geöffnete und sich in seiner Freigabestellung befindliche erste Rückschlagventil ungehindert, das heißt mit hoher Strömungsrate, über die Leckageöffnung aus dem Rückflussverhinderer austreten kann.

Ein Rückflussverhinderer mit den Merkmalen des Oberbegriffes von Patentanspruch 1 ist aus der Gebrauchsmusterschrift DE 20 2005 008 127 U1 bekannt. Das darin beschriebene erste Rückschlagventil weist ein Ventilgehäuse auf, das einen Ventilsitz ausbildet und einen federelastisch gegen den Ventilsitz vorgespannten Ventilkolben aufnimmt. Das Ventilgehäuse ist zusammen mit dem Ventilkolben translatorisch zwischen einer Sperrstellung und einer Freigabestellung verschiebbar. Zwischen diesen beiden Endstellungen kann es eine Vielzahl von Zwischenpositionen einnehmen, wobei auch eine Zwischenstellung existiert, in der die Strömungsverbindung zwischen dem Innenraum und der Leckageöffnung teilweise freigegeben ist.

Aufgabe der vorliegenden Erfindung ist es, einen Rückflussverhinderer der eingangs genannten Art derart weiterzubilden, dass die Gefahr eines unbeabsichtigten Öffnens des ersten Rückschlagventils bei einer Undichtigkeit desselben vermindert wird.

Diese Aufgabe wird durch einen Rückflussverhinderer mit den Merkmalen von Patentanspruch 1 gelöst.

Unterliegt der Rückflussverhinderer einer Druckbeaufschlagung im Bereich seiner Einlassöffnung, ohne dass Reinigungsflüssigkeit über die Auslassöffnung aus dem Rückflussverhinderer austreten kann, beispielsweise weil ein an den Rückflussverhinderer angeschlossenes Reinigungsgerät ausgeschaltet ist, so steigt bei einer Undichtigkeit des ersten Rückflussverhinderers der Druck im Bereich zwischen den beiden Rückschlagventilen allmählich an. Dies hat zur Folge, dass das erste Rückschlagventil ausgehend von seiner Sperrstellung sich in Richtung auf seine Freigabestellung verschiebt, noch bevor das erste Rückschlagventil öffnet. Ausgehend von seiner Sperrstellung nimmt das erste Rückschlagventil dann eine Zwischenstellung ein, in der die Strömungsverbindung zwischen dem Innenraum des Gehäuses und der Leckageöffnung zu einem Teil freigebbar ist. Dies hat zur Folge, dass sich der Druck im Innenraum des Gehäuses wieder absenken kann, indem Wasser aus dem Innenraum mit geringer Strömungsrate über die Leckageöffnung entweichen kann. Es wird also lediglich das aufgrund der Undichtigkeit des ersten Rückschlagventils in den Innenraum gelangende Wasser über die Leckageöffnung wieder abgegeben, wohingegen ein vollständiges Öffnen des ersten Rückschlagventils unterbunden wird. Durch das teilweise Öffnen der Strömungsverbindung zwischen dem Innenraum des Gehäuses und der Leckageöffnung wird somit in der Zwischenstellung bei einer Undichtigkeit des ersten Rückschlagventils im Innenraum ein Druck aufrechterhalten, der ein Öffnen des ersten Rückschlagventils verhindert. Es kann beispielsweise vorgesehen sein, dass in der Zwischenstellung des geschlossenen Rückschlagventiles bei dessen Undichtigkeit Wasser mit einer Strömungsrate von 30 Liter pro Stunde über die Leckageöffnung ausströmen kann, wohingegen bei geöffnetem ersten Rückschlagventil Wasser mit einer Strömungsrate von 3000 Liter pro Stunde ausströmen könnte.

Dem ersten Rückschlagventil sind ein Dichtungselement, eine Dichtfläche sowie eine in Richtung der Freigabestellung an die Dichtfläche anschließende Anlagefläche zugeordnet, wobei das Dichtungselement in der Sperrstellung des ersten Rückschlagventiles an der Dichtfläche unter Ausbildung eines geschlossenen Dichtbereichs anliegt und wobei das Dichtungselement in der Zwischenstellung des ersten Rückschlagventiles unter Ausbildung eines unterbrochenen Dichtbereichs an der Anlagefläche anliegt. In der Sperrstellung liegt das Dichtungselement strömungsdicht an der zugeordneten Dichtfläche an, indem es einen geschlossenen Dichtbereich ausbildet. In der Zwischenstellung ist der Dichtbereich unterbrochen, so dass eine gewisse Menge an Wasser aus dem Innenraum des Gehäuses über die Unterbrechungen des Dichtbereichs zur Leckageöffnung gelangen kann. Je nachdem, wie groß die Unterbrechungen gewählt werden, kann somit mehr oder weniger Wasser aus dem Innenbereich des Gehäuses herausströmen, um sicherzustellen, dass im Falle einer Undichtigkeit des ersten Rückschlagventiles eine kontinuierliche Druckerhöhung und eine daraufhin erfolgende schlagartige Druckabsenkung im Bereich des Innenraums des Gehäuses und damit ein vollständiges Öffnen des ersten Rückschlagventiles verhindert wird.

Das Dichtungselement ist am ersten Rückschlagventil angeordnet. Das erste Rückschlagventil umfasst ein verschiebbar im Gehäuse des Rückflussverhinderers gehaltenes Ventilgehäuse, das außenseitig eine Ringnut aufweist, in der ein Dichtring angeordnet ist. Letzterer weist vorzugsweise eine Dichtlippe auf, die in der Sperrstellung des ersten Rückschlagventiles an der zugeordneten Dichtfläche unter Ausbildung einer geschlossenen Dichtlinie anliegt.

Die Dichtfläche und die Anlagefläche sind am zweiten Rückschlagventil angeordnet.

Erfindungsgemäß weist das zweite Rückschlagventil ein Ventilgehäuse auf mit einer Aufnahme, die die Dichtfläche und die Anlagefläche ausbildet und in die das erste Rückschlagventil in der Sperr- und der Zwischenstellung eintaucht, wobei die Dichtfläche zylindermantelförmig ausgestaltet ist und sich die Anlagefläche entgegen der Durchströmungsrichtung an die Dichtfläche anschließt und sich konisch erweitert. Die Anlagefläche hat mindestens eine Ausnehmung. In der Sperrstellung taucht das erste Rückschlagventil so weit in die Aufnahme des zweiten Rückschlagventiles ein, dass es mit dem Dichtring die zylindermantelförmige Dichtfläche der Aufnahme erreicht, so dass die Strömungsverbindung zwischen dem Innenraum des Gehäuses und der Leckageöffnung abgesperrt ist. Kommt es zu einer Undichtigkeit des ersten Rückschlagventiles, so hebt dieses aufgrund des zunehmenden Druckes im Bereich des Innenraums des Gehäuses allmählich von der Dichtfläche ab und erreicht die sich an diese anschließende Anlagefläche der Aufnahme des zweiten Rückschlagventiles. Die Anlagefläche weist mindestens eine Ausnehmung auf, so dass Wasser über die Ausnehmung zur Leckageöffnung gelangen kann, um einen weiteren Druckaufbau im Bereich des Innenraums des Gehäuses zu vermeiden.

Wie erwähnt, weist die Anlagefläche zumindest eine Ausnehmung auf, die in der Zwischenstellung des ersten Rückschlagventiles einen Strömungsdurchlass zwischen dem Innenraum des Gehäuses und der Leckageöffnung ausbildet. Das in der Sperrstellung des ersten Rückschlagventiles strömungsdicht an der Dichtfläche anliegende Dichtungselement liegt in der Zwischenstellung des ersten Rückschlagventiles an der Anlagefläche an. Hierbei wird der Dichtbereich zwischen dem Dichtungselement und der Anlagefläche durch die mindestens eine Ausnehmung der Anlagefläche unterbrochen, das heißt die Ausnehmung bildet einen Strömungsdurchlass, über den Wasser aus dem Innenraum des Gehäuses zur Leckageöffnung gelangen kann. Durch Wahl der Größe der Ausnehmung kann auf konstruktiv einfache Weise die Strömungsrate vorgegeben werden, mit der im Falle einer Undichtigkeit des ersten Rückschlagventiles Wasser vom Innenraum zur Leckageöffnung strömen kann.

Das Dichtungselement ist vorzugsweise als Radialdichtung ausgestaltet, die in der Sperrstellung des ersten Rückschlagventiles unter Ausbildung einer kreisförmigen Dichtlinie an der zylindermantelförmigen Dichtfläche anliegt. Als Radialdichtung kann beispielsweise ein O-Ring zum Einsatz kommen, von besonderem Vorteil ist der Einsatz eines profilierten Dichtringes, der vorzugsweise eine an der zylindermantelförmigen Dichtfläche anliegende Dichtlippe ausbildet.

Günstig ist es, wenn die Anlagefläche mehrere, in gleichmäßigem Abstand zueinander angeordnete Ausnehmungen aufweist. Die Ausnehmungen können beispielsweise in Form von Rillen, Nuten oder Rinnen ausgestaltet sein, die in die Anlagefläche eingeformt sind.

Bei einer besonders bevorzugten Ausführungsform weist die konisch ausgestaltete Anlagefläche mehrere taschenförmige Ausnehmungen auf. Die Anlagefläche verengt sich in Richtung auf die Sperrstellung des ersten Rückschlagventiles. Sie bildet dadurch eine Führung für das erste Rückschlagventil aus, wenn dieses ausgehend von seiner Freigabestellung über die Zwischenstellung in seine Sperrstellung übergeht. Durch die taschenförmigen Ausnehmungen ist sichergestellt, dass in der Zwischenstellung des ersten Rückschlagventiles eine begrenzte Menge an Reinigungsflüssigkeit, beispielsweise mit einer Strömungsrate von etwa 30 Liter pro Stunde, aus dem Innenraum über die Leckageöffnung entweichen kann.

Von besonderem Vorteil ist es, wenn sich an die Anlagefläche ein der Dichtfläche abgewandter Kragen anschließt, dessen Innendurchmesser größer ist als der Außendurchmesser des Ventilgehäuses des ersten Rückschlagventiles. Der Kragen kann das Ventilgehäuse des ersten Rückschlagventiles in dessen Sperr- und Zwischenstellung in Umfangsrichtung umgeben, wobei zwischen dem Ventilgehäuse und dem Kragen ein Ringraum ausgebildet wird, über den ausgehend von der mindestens einen Ausnehmung der Anlagefläche Reinigungsflüssigkeit zur Leckageöffnung gelangen kann, falls das erste Rückschlagventil seine Zwischenstellung einnimmt.

Von besonderem Vorteil ist es, wenn das Gehäuse des Rückflussverhinderers einen zylindermantelförmigen Führungsabschnitt aufweist, in dem das erste Rückschlagventil verschiebbar gehalten ist, wobei der Innendurchmesser des Führungsabschnittes identisch ist mit dem Innendurchmesser der Dichtfläche. Eine derartige Ausgestaltung hat den Vorteil, dass das erste Rückschlagventil in seiner Sperrstellung mit einem bezogen auf die Durchströmungsrichtung des Rückflussverhinderers vorderen Endbereich an der zylindermantelförmigen Dichtfläche und mit einem bezogen auf die Durchströmungsrichtung des Rückflussverhinderers hinteren Endbereich am zylindermantelförmigen Führungsabschnitt anliegt, dessen Innendurchmesser dem Innendurchmesser der Dichtfläche entspricht. Dadurch wird ein Verkanten des ersten Rückschlagventiles beim Übergang von seiner Freigabestellung in seine Sperrstellung vermieden.

Als günstig hat es sich erwiesen, wenn das Ventilgehäuse des ersten Rückschlagventils ein im Führungsabschnitt verschiebbar gehalten ist und außenseitig zwei im Abstand zueinander angeordnete Ringnuten umfasst, in denen jeweils ein Dichtring angeordnet ist, wobei ein erster Dichtring unabhängig von der Stellung des ersten Rückschlagventiles am Führungsabschnitt anliegt und wobei der zweite Dichtring in der Sperrstellung des ersten Rückschlagventiles an der Dichtfläche anliegt. Die beiden Dichtringe sind vorzugsweise profiliert und bei einer besonders bevorzugten Ausführungsform identisch ausgestaltet. Durch den Einsatz der beiden Dichtringe wird eine gute Verschiebbarkeit des ersten Rückschlagventiles im Gehäuse des Rückflussverhinderers sichergestellt, insbesondere wird ein Verkanten des ersten Rückschlagventiles verhindert.

Die nachfolgende Beschreibung einer bevorzugten Ausführungsform der Erfindung dient im Zusammenhang mit der Zeichnung der näheren Erläuterung. Es zeigen:
- Figur 1:: eine Längsschnittansicht eines erfindungsgemäßen Rückflussverhinderers im unbelasteten Zustand;
- Figur 2:: eine Längsschnittansicht entsprechend Figur 1 beim Durchströmen des Rückflussverhinderers mit Flüssigkeit und
- Figur 3:: eine Längsschnittansicht entsprechend Figur 1 bei einseitiger Druckbeaufschlagung im Bereich einer Einlassöffnung des Rückflussverhinderers und undichtem ersten Rückschlagventil.

In der Zeichnung ist ein Rückflussverhinderer 10 dargestellt mit einem Gehäuse 11, das ein erstes Gehäuseteil 12 und ein zweites Gehäuseteil 13 aufweist, die in der dargestellten Ausführungsform miteinander verschraubt sind. Das Gehäuse 11 definiert einen Strömungskanal, der eine Einlassöffnung 15 im ersten Gehäuseteil 12 mit einer Auslassöffnung 16 im zweiten Gehäuseteil 13 verbindet. In Durchströmungsrichtung 18 ungefähr mittig zwischen der Einlassöffnung 15 und der Auslassöffnung 16 weist das Gehäuse 11 zumindest eine, vorzugsweise mehrere über den Umfang des Gehäuses 12 verteilte Leckageöffnungen 19 auf.

Das erste Gehäuseteil 12 ist als Rohrleitungsabschnitt ausgebildet und umfasst einen sich an die Einlassöffnung 15 anschließenden Einlasskanal 21, an den sich über eine Stufe 22 ein zylindermantelförmiger Führungsabschnitt 23 anschließt. Der Einlasskanal 21 trägt im Bereich der Einlassöffnung 15 ein Außengewinde 25 zum Anschluss des Rückflussverhinderers 10 an eine Trinkwasserversorgungsleitung, und der Führungsabschnitt 23 weist der Einlassöffnung 15 abgewandt eine Stirnfläche 26 auf, deren Flächennormale parallel zur Durchströmungsrichtung 18 ausgerichtet ist.

Das zweite Gehäuseteil 13 ist ebenfalls als Rohrleitungsabschnitt ausgebildet und umfasst einen in die Auslassöffnung 16 einmündenden Auslasskanal 28 mit einem Innengewinde 29. Mit Hilfe des Innengewindes 29 kann der Rückflussverhinderer 10 auslassseitig beispielsweise an ein Reinigungsgerät, insbesondere an ein Hochdruckreinigungsgerät, angeschlossen werden. An den Auslasskanal 28 schließt sich entgegen der Durchströmungsrichtung 18 ein radial nach innen gerichteter Bund 31 an sowie ein Aufnahmeabschnitt 32, der über eine Stufe 33 in einen Führungsabschnitt 34 übergeht. An seinem freien Endbereich weist der Führungsabschnitt 34 des zweiten Gehäuseteiles 13 ein Innengewinde auf zum Verschrauben des zweiten Gehäuseteiles 13 mit dem ersten Gehäuseteil 12. Dem Innengewinde benachbart sind im Führungsabschnitt 34 die Leckageöffnungen 19 angeordnet.

Das Gehäuse 11 nimmt ein erstes Rückschlagventil 37 und ein zweites Rückschlagventil 39 auf, die in Durchströmungsrichtung 18 hintereinander angeordnet sind. Das erste Rückschlagventil 37 ist im Bereich des Führungsabschnittes 23 des ersten Gehäuseteils 12 angeordnet und umfasst ein becherförmiges Ventilgehäuse 41 mit einem Ventilgehäusemantel 42 und einem Ventilgehäuseobden 43. Letzterer weist eine Durchlassöffnung 45 auf, an die sich in Durchströmungsrichtung 18 ein sich konisch erweiternder Ventilsitz 46 anschließt. Der Ventilgehäusemantel 42 weist außenseitig eine erste Ringnut 48 und eine zweite Ringnut 49 auf, die ein erstes Dichtungselement in Form eines ersten profilierten Dichtringes 51 bzw. ein zweites Dichtungselement in Form eines zweiten profilierten Dichtringes 52 aufnehmen. Die erste Ringnut 48 ist bezogen auf die Durchströmungsrichtung 18 in einem hinteren Endbereich und die zweite Ringnut 49 ist in einem bezogen auf die Durchströmungsrichtung 18 vorderen Endbereich des Ventilgehäusemantels 42 angeordnet. Die beiden Dichtringe 51 und 52 weisen jeweils eine Dichtlippe 53 bzw. 54 auf, wobei die Dichtlippe 53 unabhängig von der Stellung des ersten Rückschlagventiles 37 an der Innenseite des Führungsabschnittes 23 des ersten Gehäuseteiles 12 unter Ausbildung einer kreisförmigen Dichtlinie anliegt.

Das Ventilgehäuse 41 umgibt einen Schließkörper in Form eines Ventilkolbens 56, der eine konische Dichtfläche 57 aufweist, an die sich in Durchströmungsrichtung 18 ein den Ventilkolben 56 in Umfangsrichtung umgebender O-Ring 58 anschließt. Der Einlassöffnung 15 zugewandt trägt der Ventilkolben 56 vier senkrecht zueinander ausgerichtete Führungsrippen 59, die die Durchlassöffnung 45 durchgreifen und in dieser gleitend geführt sind. Den Führungsrippen 59 abgewandt trägt der Ventilkolben 56 einen Führungsstift 60, der von einer Schließfeder 61 umgeben ist.

Das zweite Rückschlagventil 39 weist ein Ventilgehäuse 64 auf, das einen sich in Durchströmungsrichtung 18 entsprechend der Stufe 33 stufig verengenden Ventilgehäusemantel 65 mit einem hinteren Mantelabschnitt 66 und einem vorderen Mantelabschnitt 67 umfasst. Der hintere Mantelabschnitt 66 ist im Führungsabschnitt 34 des zweiten Gehäuseteiles 13 geführt und geht über eine stufige Verengung 68 in den vorderen Mantelabschnitt 67 über, der im Bereich des Aufnahmeabschnittes 32 gleitend geführt ist und der außenseitig eine Ringnut 69 aufweist, in der ein profilierter Dichtring 70 angeordnet ist. Letzterer bildet eine Dichtlippe 71 aus, die an der Innenseite des Aufnahmeabschnittes 32 strömungsdicht anliegt.

An den vorderen Mantelabschnitt 67 schließt sich ein Ventilgehäuseboden 72 an mit einer zentralen Durchlassöffnung 73, die sich in Durchströmungsrichtung 18 über einen konischen Ventilsitz 74 erweitert.

In Durchströmungsrichtung 18 schließt sich an das Ventilgehäuse 64 des zweiten Rückschlagventiles 39 eine Stützhülse 76 an, die mit dem Ventilgehäuse 64 verrastet ist und im Abstand zur Durchlassöffnung 73 vier senkrecht zueinander ausgerichtete Stützarme 77 trägt, die mit einer koaxial zur Durchlassöffnung 73 ausgerichteten Führungshülse 78 einstückig verbunden sind.

Das zweite Rückschlagventil 39 weist außerdem einen Schließkörper in Form eines Ventilkolbens 81 auf, der identisch ausgestaltet ist wie der Ventilkolben 56 des ersten Rückschlagventiles 37 und eine konische Dichtfläche 82 aufweist, an die sich in Durchströmungsrichtung 18 ein den Ventilkolben 81 in Umfangsrichtung umgebender O-Ring 83 anschließt. Der Einlassöffnung 15 zugewandt trägt der Ventilkolben 81 vier senkrecht zueinander ausgerichtete Führungsrippen 84, die in der Durchlassöffnung 73 des Ventilgehäuses 64 gleitend geführt sind. Der Einlassöffnung 15 abgewandt trägt der Ventilkolben 81 einen Führungsstift 85, der die Führungshülse 78 durchgreift und von einer Schließfeder 86 umgeben ist, die sich einerseits am Ventilkolben 81 und andererseits an den Stützarmen 77 abstützt.

Das zweite Rückschlagventil 39 bildet mit seinem Ventilgehäuse 64 eine Führung aus für den Führungsstift 60 des ersten Rückschlagventiles 37. Hierzu taucht der Führungsstift 60 in eine koaxial zur Durchlassöffnung 45 des ersten Rückschlagventiles 37 ausgerichtete Führungshülse 89 ein, die an das Ventilgehäuse 64 des zweiten Rückschlagventiles 39 angeformt ist. Die den Führungsstift 60 umgebende Schließfeder 61 stützt sich einerseits am Ventilgehäuse 41 des ersten Rückschlagventiles 37 und andererseits am Ventilgehäuse 64 des zweiten Rückschlagventiles 39 ab.

Der Durchströmungsrichtung 18 entgegengerichtet schließt sich an den hinteren Mantelabschnitt 66 des Ventilgehäusemantels 65 des zweiten Rückschlagventiles 39 ein in Richtung auf das erste Gehäuseteil 12 ausgerichteter Kragen 91 an, dessen Innendurchmesser größer ist als der Außendurchmesser des Ventilgehäusemantels 42 des ersten Rückschlagventiles 37. Der Kragen 91 definiert in Kombination mit dem hinteren Mantelabschnitt 66 eine Aufnahme 93, die sich vom Kragen 91 über eine sich in Durchströmungsrichtung 18 konisch verjüngende Anlagefläche 94 und eine sich an diese anschließende zylindermantelförmige Dichtfläche 95 bis zu einer Anschlagfläche 96 erstreckt, deren Flächennormale parallel zur Durchströmungsrichtung 18 ausgerichtet ist. Die Anlagefläche 94 weist mehrere, in Umfangsrichtung in gleichmäßigem Abstand zueinander angeordnete Vertiefungen oder Ausnehmungen 98 auf, an die sich im Bereich des Kragens 91 Schlitze 99 anschließen, die sich bis an die freie Stirnseite des Kragens 91 erstrecken.

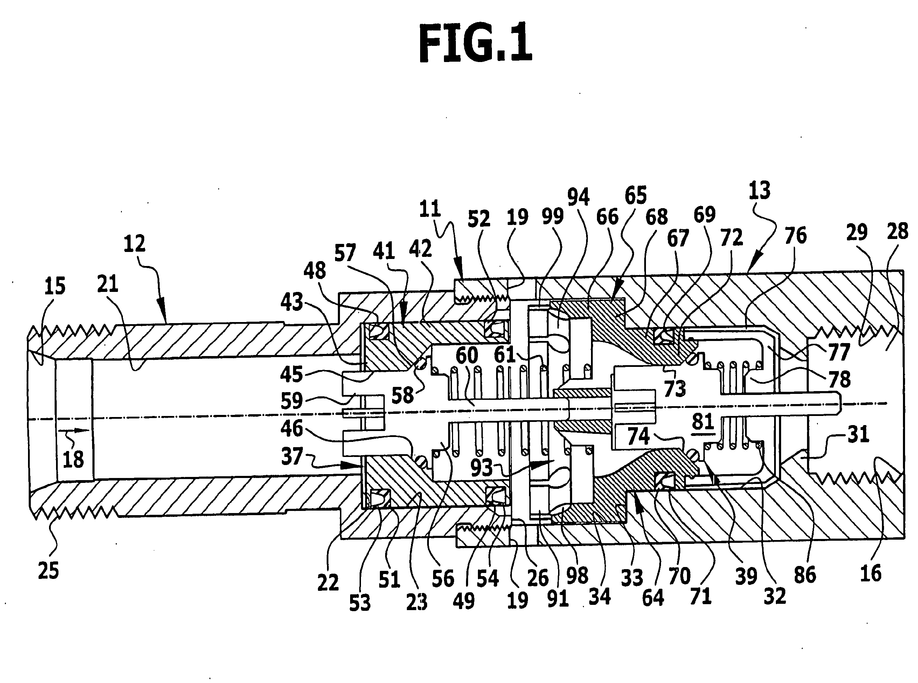

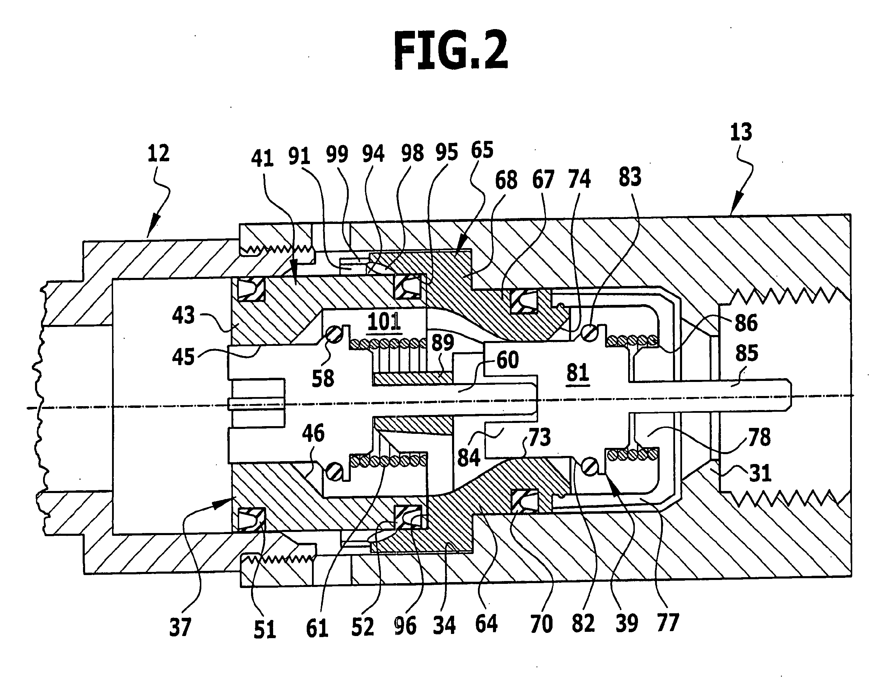

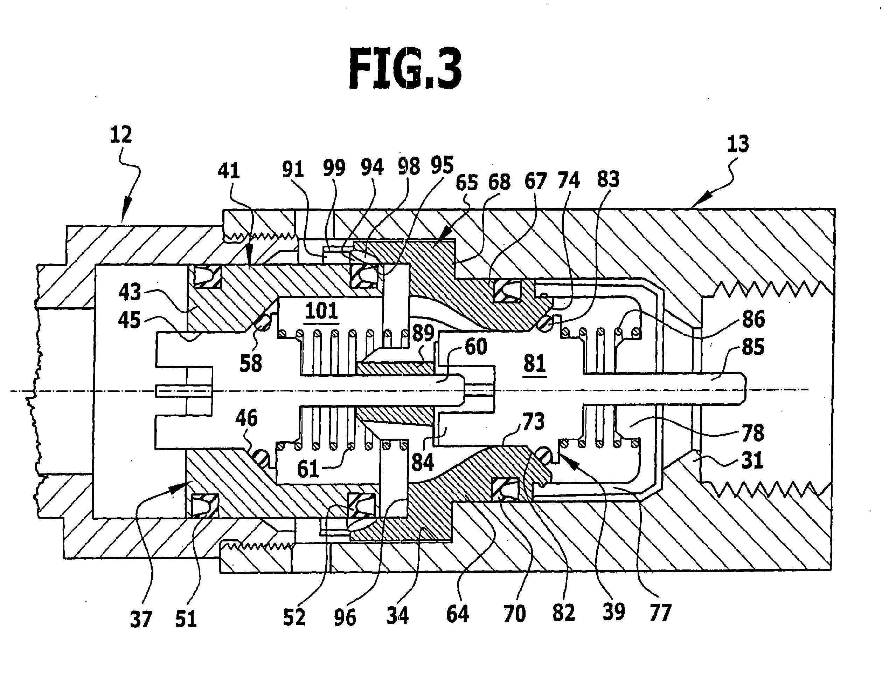

Sowohl das erste Rückschlagventil 37 als auch das zweite Rückschlagventil 39 sind im Gehäuse 11 in Durchströmungsrichtung hin und her verschiebbar gehalten. Das erste Rückschlagventil 37 kann hierbei zwischen einer in Figur 1 dargestellten Freigabestellung, in der der Ventilgehäuseboden 43 an der Stufe 22 des ersten Gehäuseteiles 12 anliegt, und einer in Figur 2 dargestellten Sperrstellung, in der der freie Endbereich des Ventilgehäusemantels 42 in die Aufnahme 93 eintaucht, wobei der zweite Dichtring 52 mit seiner Dichtlippe 54 unter Ausbildung einer kreisförmigen Dichtlinie an der Dichtfläche 95 anliegt, hin und her verschoben werden. Das erste Rückschlagventil 37 weist in geringfügigem Abstand zu der in Figur 2 dargestellten Sperrstellung noch eine Figur 3 dargestellte Zwischenstellung auf, in der der zweite Dichtring 52 in Höhe der Anlagefläche 94 positioniert ist. In diesem Falle bildet der zweite Dichtring 52 eine von den Ausnehmungen 98 unterbrochene Dichtlinie aus.

Das zweite Rückschlagventil 39 kann zwischen der in den Figuren 1, 2 und 3 dargestellten vorderen Endstellung, in der es an der Stufe 33 des zweiten Gehäuseteiles 13 anliegt, und einer in der Zeichnung nicht dargestellten hinteren Endstellung, in der der Kragen 91 an der Stirnfläche 26 des ersten Gehäuseteiles 12 anliegt, hin und her verschoben werden.

Im unbelasteten Zustand, in dem weder der Bereich der Einlassöffnung 15 noch der Bereich der Auslassöffnung 16 mit Druck beaufschlagt ist, nimmt der Rückflussverhinderer 10 die in Figur 1 dargestellte Stellung ein, in der die beiden Rückschlagventile 37 und 39 geschlossen sind, das heißt die Ventilkolben 56 und 81 liegen mit ihren O-Ringen 58 bzw. 83 an den korrespondierenden Ventilsitzen 46 bzw. 74 an. Außerdem nimmt das erste Rückschlagventil 37 in diesem Zustand seine Freigabestellung ein, so dass eine Strömungsverbindung besteht von einem zwischen den beiden Rückschlagventilen 37 und 39 angeordneten Innenraum 101 des Gehäuses 11 und den Leckageöffnungen 19, und das zweite Rückschlagventil 39 nimmt seine bereits erläuterte vordere Endstellung ein.

An die Einlassöffnung 15 kann eine Trinkwasserversorgungsleitung und an die Auslassöffnung 16 kann ein Hochdruckreinigungsgerät angeschlossen werden, so dass der Rückflussverhinderer 10 von Wasser durchströmt werden kann. Hierbei wird das erste Rückschlagventil 37 aufgrund des im Bereich des Einlasskanals 21 herrschenden Wasserdruckes in Durchströmungsrichtung 18 nach vorne verschoben bis der zweite Dichtring 52 strömungsdicht an der Dichtfläche 95 anliegt, so dass das erste Rückschlagventil 37 seine Sperrstellung einnimmt, in der die Strömungsverbindung zwischen dem Innenraum 101 und den Leckageöffnungen 19 aufgrund der dichten Anlage des Dichtringes 52 an der Dichtfläche 95 unterbrochen ist. Außerdem gehen die beiden Rückschlagventile 37 und 39 in ihre geöffnete Stellung über, in der die Ventilkolben 56 bzw. 81 im Abstand zu den zugeordneten Ventilsitzen 46 bzw. 74 positioniert sind, so dass die Rückschlagventile 37 und 39 von Wasser durchströmt werden können. Dieser Zustand ist in Figur 2 dargestellt.

Wird anschließend das Hochdruckreinigungsgerät abgeschaltet, so schließen zwar die beiden Rückschlagventile 37 und 39, bei im Einlasskanal 21 weiterhin herrschenden Wasserdruck behalten sie aber ihre aktuellen Positionen bei, insbesondere verbleibt das erste Rückschlagventil 37 in seiner Sperrstellung. Kommt es in diesem Zustand zu einer Undichtigkeit des ersten Rückschlagventiles 37, beispielsweise weil der O-Ring 58 beschädigt ist, so strömt im Laufe der Zeit eine gewisse Menge von Wasser durch das geschlossene erste Rückschlagventil 37 hindurch in den Innenraum 101. Dies hat zur Folge, dass sich im Innenraum 101 der Wasserdruck erhöht und folglich unter Mitwirkung der Schließfeder 61 das erste Rückschlagventil 37 entgegen der Durchströmungsrichtung 18 verschoben wird. Eine derartige Verschiebebewegung hat zur Folge, dass der zweite Dichtring 52 ausgehend von der Dichtfläche 95 die Anlagefläche 94 erreicht, in der aufgrund der Ausnehmungen 98 keine strömungsdichte Anlage des Dichtringes 52 an der Anlagefläche 94 gewährleitet ist. Vielmehr ist durch die Bereitstellung der Ausnehmungen 98 die Strömungsverbindung zwischen dem Innenraum 101 und den Leckageöffnungen 19 in vorgegebener Weise so weit freigegeben, dass Wasser mit einer geringen Strömungsrate, beispielsweise mit einer Strömungsrate von 30 Liter pro Stunde, aus dem Innenraum 101 über die Ausnehmungen 98 zu den Leckageöffnungen 19 gelangen kann. Dadurch wird eine weitere Verschiebung des ersten Rückschlagventiles 37 in Richtung der Freigabestellung und damit ein plötzlicher Druckabfall im Innenraum 101 aufgrund der dann vorliegenden Strömungsverbindung zur Leckageöffnung vermieden. Ein derartiger Druckabfall hätte nämlich zur Folge, dass das erste Rückschlagventil 37 öffnet, sich also der Ventilkolben 56 mit seinem O-Ring 58 vom korrespondierenden Ventilsitz 46 abhebt und dadurch dem Rückflussverhinderer 10 über den Einlasskanal 21 zugeführtes Wasser mit großer Strömungsrate, beispielsweise mit einer Strömungsrate von 3000 Liter pro Stunde, durch das erste Rückschlagventil 37 hindurch zu den Leckageöffnungen 19 strömen könnte. Es wird also unter Inkaufnahme einer verhältnismäßig kleinen Leckage bei einer Undichtigkeit des ersten Rückschlagventiles 37 ein intensives Ausströmen von Wasser verhindert.

Kommt es beim Abschalten des an die Auslassöffnung 16 angeschlossenen Hochdruckreinigungsgerätes kurzfristig zu einer Druckerhöhung im Bereich der Auslassöffnung 16, so kann diese Druckerhöhung zuverlässig dadurch abgefangen werden, dass sich das zweite Rückschlagventil 39 entgegen der Druchströmungsrichtung 18 verschiebt, ohne dass dadurch die Verschiebbarkeit des ersten Rückschlagventiles zwischen seiner Freigabestellung, seiner Sperrstellung und seiner Zwischenstellung beeinträchtigt ist. Selbst wenn das zweite Rückschlagventil 39 mit seinem Kragen 91 an der Stirnfläche 26 des ersten Gehäuesteiles 12 anliegt, ist über die in den Kragen 91 eingeformten Schlitze 99, die sich an die Ausnehmungen 98 anschließen, gewährleistet, dass in der Zwischenstellung des ersten Rückschlagventiles 37 Wasser mit geringer Strömungsrate mungsrate aus dem Innenraum 101 zu den Leckageöffnungen 19 gelangen kann.

## Patentansprüche

1. Rückflussverhinderer mit einem Gehäuse (11), das eine Einlassöffnung (15), eine Auslassöffnung (16) sowie eine in Durchströmungsrichtung zwischen der Einlass- und der Auslassöffnung (15, 16) angeordnete Leckageöffnung (19) aufweist und das ein erstes und ein zweites Rückschlagventil (37, 39) aufnimmt, die in Durchströmungsrichtung (18) mit identischer Schließrichtung hintereinander angeordnet sind, wobei das erste Rückschlagventil (37) im Gehäuse (11) verschiebbar gehalten ist und durch Hin- und Herverschieben des ersten Rückschlagventiles (37) zwischen einer Sperrstellung und einer Freigabestellung eine Strömungsverbindung zwischen einem zwischen den beiden Rückschlagventilen (37, 39) angeordneten Innenraum (101) des Gehäuses (11) und der Leckageöffnung (19) absperrbar bzw. freigebbar ist, wobei das erste Rückschlagventil (37) zwischen der Sperrstellung und der Freigabestellung eine Zwischenstellung aufweist, in der die Strömungsverbindung zwischen dem Innenraum (101) und der Leckageöffnung (19) teilweise freigebbar ist, wobei dem ersten Rückschlagventil (37) ein Dichtungselement (52), eine Dichtfläche (95) sowie eine in Richtung der Freigabestellung an die Dichtfläche (95) anschließende Anlagefläche (94) zugeordnet sind, wobei das Dichtungselement (52) in der Sperrstellung des ersten Rückschlagventiles (37) an der Dichtfläche (95) unter Ausbildung eines geschlossenen Dichtbereichs anliegt und wobei das Dichtungselement (52) in der Zwischenstellung des ersten Rückschlagventiles (37) unter Ausbildung eines unterbrochenen Dichtbereichs an der Anlagefläche (94) anliegt, wobei das erste Rückschlagventil (37) ein verschiebbar im Gehäuse (11) des Rückflussverhinderers (10) gehaltenes Ventilgehäuse (41) umfasst, das außenseitig zumindest eine Ringnut (49) aufweist, und wobei das Dichtungselement als Dichtring (52) ausgestaltet ist, der in der Ringnut (49) angeordnet ist, **dadurch gekennzeichnet, dass** das zweite Rückschlagventil (39) ein Ventilgehäuse (64) aufweist mit einer Aufnahme (93), die die Dichtfläche (95) und die Anlagefläche (94) ausbildet und in die das erste Rückschlagventil (37) in der Sperr- und der Zwischenstellung eintaucht, wobei die Dichtfläche (95) zylindermantelförmig ausgestaltet ist und sich die Anlagefläche (95) entgegen der Durchströmungsrichtung (18) an die Dichtfläche (95) anschließt und sich konisch erweitert, wobei die Anlagefläche (94) zumindest eine Ausnehmung (98) aufweist, die in der Zwischenstellung des ersten Rückschlagventiles (37) einen Strömungsdurchlass zwischen dem Innenraum (101) des Gehäuses (11) und der Leckageöffnung (19) ausbildet.

2. Rückflussverhinderer nach Anspruch 1, **dadurch gekennzeichnet, dass** das Dichtungselement (52) als Radialdichtung ausgestaltet ist, die in der Sperrstellung des ersten Rückschlagventiles (37) unter Ausbildung einer kreisförmigen Dichtlinie an der Dichtfläche (95) anliegt.

3. Rückflussverhinderer nach Anspruch 1 oder 2, **dadurch gekennzeichnet, dass** die Anlagefläche (94) mehrere, in gleichmäßigem Abstand zueinander angeordnete Ausnehmungen (98) aufweist.

4. Rückflussverhinderer nach Anspruch 1, 2 oder 3, **dadurch gekennzeichnet, dass** die Anlagefläche (94) mehrere taschenförmige Ausnehmungen (98) aufweist.

5. Rückflussverhinderer nach einem der voranstehenden Ansprüche, **dadurch gekennzeichnet, dass** das Dichtungselement (52) eine Dichtlippe ( 54) aufweist.

6. Rückflussverhinderer nach einem der voranstehenden Ansprüche, **dadurch gekennzeichnet, dass** sich an die Anlagefläche (94) ein der Dichtfläche (95) abgewandter Kragen (91) anschließt, dessen Innendurchmesser größer ist als der Außendurchmesser des Ventilgehäuses (41) des ersten Rückschlagventiles (37).

7. Rückflussverhinderer nach einem der voranstehenden Ansprüche, **dadurch gekennzeichnet, dass** das Gehäuse (11) des Rückflussverhinderers (10) einen zylindermantelförmigen Führungsabschnitt (23) aufweist, in dem das erste Rückschlagventil (37) verschiebbar gehalten ist, wobei der Innendurchmesser des Führungsabschnittes (23) identisch ist mit dem Innendurchmesser der Dichtfläche (95).

8. Rückflussverhinderer nach Anspruch 7, **dadurch gekennzeichnet, dass** das Ventilgehäuse (41) des ersten Rückschlagventils (37) im Führungsabschnitt (23) verschiebbar gehalten ist und außenseitig zwei im Abstand zueinander angeordnete Ringnuten (48, 49) umfasst, in denen jeweils ein Dichtring (51, 52) angeordnet ist, wobei ein erster Dichtring (51) unabhängig von der Stellung des ersten Rückschlagventiles (37) am Führungsabschnitt (23) anliegt und wobei der zweite Dichtring (52) in der Sperrstellung des ersten Rückschlagventiles (37) an der Dichtfläche (95) anliegt.

## Claims

1. A device for preventing backflow, having a housing (11) which has an inlet opening (15), an outlet opening (16) and a leakage opening (19) that is arranged between the inlet and outlet openings (15, 16) as seen in the direction of through flow, and which receives a first and a second nonreturn valve (37, 39) which are arranged one behind the other as seen in the direction of through flow (18) and have an identical direction of closure, wherein the first nonreturn valve (37) is held in the housing (11) in displaceable manner and, as a result of the displacement to and fro of the first nonreturn valve (37) between a blocking position and a release position, a flow connection between an inner space (101) of the housing (11), which is arranged between the two nonreturn valves (37, 39), and the leakage opening (19) may be blocked or released, wherein the first nonreturn valve (37) has an intermediate position between the blocking position and the release position, in which the flow connection between the inner space (101) and the leakage opening (19) may be partly released, wherein there are associated with the first nonreturn valve (37) a sealing element (52), a sealing face (95) and an abutment face (94), this last adjoining the sealing face (95) in the direction of the release position, wherein the sealing element (52) abuts against the sealing face (95) in the blocking position of the first nonreturn valve (37), forming a closed sealing region, and wherein the sealing element (52) abuts against the abutment face (94) in the intermediate position of the first nonreturn valve (37), forming an interrupted sealing region, wherein the first nonreturn valve (37) includes a valve housing (41) which is held displaceably in the housing (11) of the device for preventing backflow (10) and has on the outside at least one annular groove (49), and wherein the sealing element takes the form of a sealing ring (52) which is arranged in the annular groove (49), **characterised in that** the second nonreturn valve (39) has a valve housing (64) with a receiver (93) which forms the sealing face (95) and the abutment face (94) and into which the first nonreturn valve (37) reaches in the blocking and intermediate positions, wherein the sealing face (95) takes the form of a cylinder casing and the abutment face (95) adjoins the sealing face (95) as seen in the direction opposed to that of through flow (18) and expands conically, wherein the abutment face (94) has at least one recess (98) which, in the intermediate position of the first nonreturn valve (37), forms a through-flow point between the inner space (101) of the housing (11) and the leakage opening (19).

2. A device for preventing backflow according to Claim 1, **characterised in that** the sealing element (52) takes the form of a radial seal which in the blocking position of the first nonreturn valve (37) abuts against the sealing face (95), forming a circular seal line.

3. A device for preventing backflow according to Claim 1 or 2, **characterised in that** the abutment face (94) has a plurality of recesses (98) which are arranged spaced equally from one another.

4. A device for preventing backflow according to Claim 1, 2 or 3, **characterised in that** the abutment face (94) has a plurality of pocket-like recesses (98).

5. A device for preventing backflow according to one of the preceding claims, **characterised in that** the sealing element (52) has a sealing lip (54).

6. A device for preventing backflow according to one of the preceding claims, **characterised in that** a collar (91) which faces away from the sealing face (95) and whereof the internal diameter is greater than the external diameter of the valve housing (41) of the first nonreturn valve (37) adjoins the abutment face (94).

7. A device for preventing backflow according to one of the preceding claims, **characterised in that** the housing (11) of the device for preventing backflow (10) has a guide portion (23) which is in the form of a cylinder casing and in which the first nonreturn valve (37) is held displaceably, wherein the internal diameter of the guide portion (23) is identical to the internal diameter of the sealing face (95).

8. A device for preventing backflow according to Claim 7, **characterised in that** the valve housing (41) of the first nonreturn valve (37) is held displaceably in the guide portion (23) and includes on the outside two annular grooves (48, 49) which are arranged spaced from one another and in each of which a sealing ring (51, 52) is arranged, wherein a first sealing ring (51) abuts against the guide portion (23) irrespective of the position of the first nonreturn valve (37), and wherein the second sealing ring (52) abuts against the sealing face (95) in the blocking position of the first nonreturn valve (37).

## Revendications

1. Dispositif anti-reflux comportant un boîtier (11) comprenant une ouverture d'entrée (15), une ouverture de sortie (16) et une ouverture de fuite (19) disposée dans le sens de traversée entre l'ouverture d'entrée et l'ouverture de sortie (15, 16) et logeant un premier et un second clapet anti-retour (37, 39) disposés l'un derrière l'autre dans le sens de traversée (18) en présentant une direction de fermeture identique, le premier clapet anti-retour (37) étant retenu mobile dans le boîtier (11) et une liaison fluidique entre un espace intérieur (101) du boîtier (11) disposé entre les deux clapets anti-retour (37) et l'ouverture de fuite (19) pouvant être bloquée ou libérée par un déplacement du premier clapet anti-retour (37) en va-et-vient entre une position bloquée et une position libérée , le premier clapet anti-retour (37) comprenant entre la position bloquée et la position libérée une position intermédiaire dans laquelle la liaison fluidique entre l'espace intérieur (101) et l'ouverture de fuite (19) peut être en partie libérée, un élément d'étanchéité (52), une surface d'étanchéité (95) et une surface d'appui (94) dans le prolongement de la surface d'étanchéité (95) en direction de la position libérée étant associés au premier clapet anti-retour (37), l'élément d'étanchéité (52) reposant dans la position bloquée du premier clapet anti-retour (37) contre la surface d'étanchéité (95) avec formation d'une zone d'étanchéité fermée et l'élément d'étanchéité (52) reposant dans la position intermédiaire du premier clapet anti-retour (37) avec formation d'une zone d'étanchéité interrompue contre la surface d'appui (94), le premier clapet anti-retour (37) comprenant un carter de clapet (41) retenu mobile dans le boîtier (11) du dispositif anti-reflux (10), ledit carter de clapet comprenant sur la face extérieure au moins une rainure annulaire (49) et l'élément d'étanchéité étant conçu comme une bague d'étanchéité (52) disposée dans la rainure annulaire (49), **caractérisé en ce que** le second clapet anti-retour (39) comprend un carter de clapet (64) comportant un logement (93) formant la surface d'étanchéité (95) et la surface d'appui (94) et dans lequel le premier clapet anti-retour (37) s'enfonce dans la position bloquée et la position intermédiaire, la surface d'étanchéité (95) étant conçue en forme de chemise de cylindre et la surface d'appui (95) se trouvant dans le prolongement de la surface d'étanchéité (95) à l'encontre du sens de passage (18) et s'élargissant de façon conique, la surface d'appui (94) comprenant au moins un évidement (98) formant dans la position intermédiaire du premier clapet anti-retour (37) un passage d'écoulement entre l'espace intérieur (101) du boîtier (11) et l'ouverture de fuite (19).

2. Dispositif anti-reflux selon la revendication 1, **caractérisé en ce que** l'élément d'étanchéité (52) est conçu comme un joint radial reposant contre la surface d'étanchéité (95) dans la position bloquée du premier clapet anti-retour (37) avec formation d'une ligne d'étanchéité circulaire.

3. Dispositif anti-reflux selon la revendication 1 ou 2, **caractérisé en ce que** la surface d'appui (94) comprend plusieurs évidements (98) disposés les uns par rapport aux autres par intervalles réguliers.

4. Dispositif anti-reflux selon la revendication 1, 2 ou 3, **caractérisé en ce que** la surface d'appui (94) comprend plusieurs évidements (98) en forme de poche.

5. Dispositif anti-reflux selon l'une quelconque des revendications précédentes, **caractérisé en ce que** l'élément d'étanchéité (52) comprend une lèvre d'étanchéité (54).

6. Dispositif anti-reflux selon l'une quelconque des revendications précédentes, **caractérisé en ce qu'**un collet (91) opposé à la surface d'étanchéité (95) se situe dans le prolongement de la surface d'appui (94), collet dont le diamètre intérieur est supérieur au diamètre extérieur du carter de clapet (41) du premier clapet anti-retour (37).

7. Dispositif anti-reflux selon l'une quelconque des revendications précédentes, **caractérisé en ce que** le boîtier (11) du dispositif anti-reflux (10) comprend une partie de guidage (23) en forme de chemise de cylindre dans laquelle le premier clapet anti-retour (37) est retenu mobile, le diamètre intérieur de la partie de guidage (23) étant identique au diamètre intérieur de la surface d'étanchéité (95).

8. Dispositif anti-reflux selon la revendication 7, **caractérisé en ce que** le carter de clapet (41) du premier clapet anti-retour (37) est retenu mobile dans la partie de guidage (23) et comprend sur la face extérieure deux rainures annulaires (48, 49) disposées à une certaine distance l'une de l'autre dans lesquelles respectivement une bague d'étanchéité (51, 52) est disposée, une première bague d'étanchéité (51) reposant contre la partie de guidage (23) indépendamment de la position du premier clapet anti-retour (37) et la seconde bague d'étanchéité (52) reposant contre la surface d'étanchéité (95) dans la position bloquée du premier clapet anti-retour (37).
